# EUROPEAN PATENT APPLICATION

(11) **EP 4 834 988 A1**
(43) Date of publication of application: **04.11.2026**
(21) Application number: 24913090.7
(22) Date of filing: 27.12.2024
(51) Int. Cl.: C08L 11/02, C08F 236/18, C08L 95/00

(54) **CHLOROPRENE LATEX, RUBBER ASPHALT EMULSION, ASPHALT LAYER, AND ASPHALT MIXTURE**

(30) Priority: 28.12.2023 JP 2023222727
(71) Applicant: Resonac Corporation, Tokyo 105-7325 (JP)
(72) Inventor: OHGUMA, Yuya, Tokyo 105-7325 (JP); OGAWA, Noriko, Tokyo 105-7325 (JP)
(74) Representative: Strehl & Partner mbB
(86) International application number: PCT/JP2024/046354
(87) International publication number: WO 2025/143204

(57) **Abstract**

An object of the present invention is to provide a rubber asphalt emulsion that can demonstrate higher aggregate holding capability when combined with an aggregate, and to provide a chloroprene latex capable of giving such a rubber asphalt emulsion. A chloroprene latex including a polymer containing structural units derived from a chloroprene monomer and structural units derived from a second monomer other than the chloroprene monomer, wherein a gel content in the chloroprene latex is 70% or more, wherein the second monomer is a monomer such that, when homopolymerized, an obtained homopolymer has crystallization temperature, glass transition temperature, or melting point of 80°C or higher, wherein a content of the structural units derived from the second monomer in the polymer is 3 to 10 parts by mass with respect to 100 parts by mass of all structural units constituting the polymer, and wherein a z-average particle diameter of the polymer is 150 nm or less.

## Description

### [Technical Field]

The present invention relates to a chloroprene latex, a rubber asphalt emulsion, an asphalt layer, and an asphalt mixture.

### [Background Art]

Asphalt is widely used in the fields of civil engineering and construction, for example, as a road pavement and as a waterproofing agent for residential roofs. In road pavements, asphalt is used in combination with an aggregate such as crushed stone and sand, functioning as an adhesive that binds the aggregate with each other. In order to allow the asphalt and aggregate to be mixed effectively, in most cases, asphalt is used in the form of an asphalt emulsion containing no aggregate. The asphalt emulsion containing no aggregate is also used in applications such as fog sealing and thin-layer surface treatment methods.

However, there is a problem that simply combining asphalt with an aggregate does not provide sufficient durability and adhesiveness required for road pavements, which tends to allow damage such as flow, rutting, and cracking of paved roads to occur. Therefore, various attempts have been made conventionally to improve durability and other properties when combined with an aggregate, by adding rubber to asphalt and modifying it to form a rubber asphalt emulsion. For example, as modifiers for asphalt, various rubbers such as natural rubber, SBR (styrenebutadiene polymer), CR (polychloroprene), SBS (styrenebutadiene block copolymer), EVA (ethylene-vinyl acetate copolymer), and polyurethane have been used (Non Patent Document 1).

### [Citation List]

### [Non Patent Document]

[Non Patent Document 1]
ASPHALT, No. 161, 1989, pp. 3-18, published by The Japan Asphalt Association

### [Summary of Invention]

### [Technical Problem]

Even in the case where asphalt to which a polychloroprene latex has been added is used in combination with an aggregate for road pavements, sufficient aggregate holding capability may not always be obtained. Low aggregate holding capability means that the aggregate can easily separate from the mixture of asphalt and aggregate, which indicates that the durability required for road pavements is insufficient. Therefore, there remains a demand for a rubber asphalt emulsion that can demonstrate higher durability when combined with an aggregate.

An object of the present invention is to provide a rubber asphalt emulsion that can demonstrate higher aggregate holding capability when combined with an aggregate, and to provide a chloroprene latex capable of giving such a rubber asphalt emulsion.

### [Solution to Problem]

The present inventors have conducted diligent studies to solve the problem described above, and have found that, by using, as a chloroprene latex, one including a polymer of chloroprene and a specific monomer, a rubber asphalt emulsion obtained by blending this chloroprene latex with asphalt can demonstrate sufficient aggregate holding capability.

That is, the present invention relates to the following chloroprene latex, rubber asphalt emulsion, asphalt layer, and asphalt mixture.
[1] A chloroprene latex comprising a polymer containing structural units derived from a chloroprene monomer and structural units derived from a second monomer other than the chloroprene monomer,
   wherein a gel content in the chloroprene latex is 70% or more,
   wherein the second monomer is a monomer such that, when homopolymerized, an obtained homopolymer has crystallization temperature, glass transition temperature, or melting point of 80°C or higher,
   wherein a content of the structural units derived from the second monomer in the polymer is 3 to 10 parts by mass with respect to 100 parts by mass of all structural units constituting the polymer, and
   wherein a z-average particle diameter of the polymer is 150 nm or less.
[2] The chloroprene latex according to [1], wherein the second monomer is 2,3-dichloro-1,3-butadiene.
[3] The chloroprene latex according to [1] or [2], wherein the z-average particle diameter of the polymer is 10 nm or more.
[4] The chloroprene latex according to any of [1] to [3], wherein the gel content is 99% or less.
[5] A rubber asphalt emulsion obtained by mixing the chloroprene latex according to any of [1] to [4] with asphalt.
[6] An asphalt layer obtained by applying and drying the rubber asphalt emulsion according to [5].
[7] An asphalt mixture obtained by mixing the rubber asphalt emulsion according to [5] with an aggregate.

### [Advantageous Effect of Invention]

The chloroprene latex of the present invention can provide a rubber asphalt emulsion that is suitable for the formation of an asphalt layer and can demonstrate high aggregate holding capability.

### [Description of Embodiments]

Hereinafter, embodiments of the present invention will be described in detail.

### [Polymer]

The polymer used in the present invention contains structural units derived from a chloroprene monomer and structural units derived from a second monomer other than the chloroprene monomer. Here, the second monomer is a monomer such that, when homopolymerized, an obtained homopolymer has crystallization temperature, glass transition temperature, or melting point of 80°C or higher. In the present invention, this polymer is contained in the chloroprene latex described below and the rubber asphalt emulsion described below, and constitutes the rubber component in the chloroprene latex and the rubber asphalt emulsion. In addition, this polymer also functions as a modifier for asphalt, and is contained in the asphalt layer described below and the asphalt mixture described below.

### <Chloroprene Monomer>

The chloroprene monomer is a first monomer that gives the polymer described above. Structural units derived from the chloroprene monomer constitute the basic skeleton of the polymer described above.

The term "chloroprene monomer" refers to the monomer of chloroprene (2-chloro-1,3-butadiene), and the term "structural units derived from the chloroprene monomer" refers to structural units corresponding to 2-chloro-1,3-butadiene, that is, structural units having any of the structures selected from the group consisting of the following formulae (1a), (1b), and (1c) (where "-*" and "*-" represent bonding sites to be bonded to other structural units):

*-CH2₋CCl(-CH=CH2₎-* ... (1a);

*-CH(-CCl=CH2₎-CH2₋* ... (1b);

and

*-CH2₋CCl(-CH(-*)-CH(-*))-* ... (1c).

Here, the term "other structural units" may refer to structural units corresponding to "structural units derived from the chloroprene monomer", or may refer to structural units not corresponding to "structural units derived from the chloroprene monomer", such as the "structural units derived from the second monomer" described below.

### <Second Monomer>

The "second monomer" used in the present invention is a monomer other than the chloroprene monomer such that, when homopolymerized, an obtained homopolymer has crystallization temperature, glass transition temperature, or melting point of 80°C or higher; that is, it is a monomer other than the chloroprene monomer that gives, when homopolymerized, a homopolymer having a crystallization temperature, glass transition temperature, or melting point of 80°C or higher. Here, the crystallization temperature, glass transition temperature, or melting point of the "homopolymer" may be affected by the degree of polymerization (or molecular weight) of the "homopolymer". On the other hand, the present inventors consider that, when the degree of polymerization (or molecular weight) of the homopolymer is at or above a certain level, the influence of the degree of polymerization (or molecular weight) on the crystallization temperature, glass transition temperature, or melting point would be sufficiently small. Taking these points into consideration, it is preferable that the "homopolymer" to be evaluated for crystallization temperature, glass transition temperature, or melting point has a relatively large molecular weight, and for example, the weight average molecular weight (Mw) is 30,000 or more.

Since, the polymer used in the present invention contains structural units derived from the "second monomer", it can impart higher aggregate holding capability to asphalt compared to a polymer containing no structural units derived from the "second monomer". It should be noted that, in the present specification, the second monomer is sometimes referred to as "highly cohesive monomer".

In the present invention, the second monomer is normally a monomer that is copolymerizable with chloroprene among monomers such that, when homopolymerized, an obtained homopolymer has crystallization temperature, glass transition temperature, or melting point of 80°C or higher.

Here, the monomer that is copolymerizable with chloroprene is not particularly restricted as long as the object of the present invention is not impaired, and examples thereof include 2,3-dichloro-1,3-butadiene, 1-chloro-1,3-butadiene, butadiene, isoprene, styrene, acrylonitrile, acrylic acid and esters thereof, and methacrylic acid and esters thereof. In the present invention, among the "monomers that are copolymerizable with chloroprene", monomers such that, when homopolymerized, an obtained homopolymer has crystallization temperature, glass transition temperature, or melting point of 80°C or higher can be used as the second monomer.

In one suitable aspect of the present invention, the "second monomer" is a monomer such that, when homopolymerized, an obtained homopolymer has crystallization temperature or glass transition temperature of 80°C or higher. Examples of monomers such that, when homopolymerized, an obtained homopolymer has glass transition temperature of 80°C or higher include styrene, vinyl chloride, acrylonitrile, polymethyl methacrylate, polyethyl methacrylate, and polyacrylic acid. Table 1 below shows the glass transition temperature of a homopolymer obtained by homopolymerization for each of 2,3-dichloro-1,3-butadiene, styrene, vinyl chloride, acrylonitrile, polymethyl methacrylate, polyethyl methacrylate, polyacrylic acid, dicyclopentanyl acrylate, and dicyclopentanyl methacrylate.

In another suitable aspect of the present invention, the "second monomer" is a monomer such that, when homopolymerized, an obtained homopolymer has melting point of 80°C or higher. Examples of monomers such that, when homopolymerized, an obtained homopolymer has melting point of 80°C or higher include 2,3-dichloro-1,3-butadiene (melting point 133°C).

**[Table 1]**

| Monomer | Glass transition temperature (°C) of corresponding homopolymer |
|---|---|
| Styrene | 100 |
| Vinyl chloride | 87 |
| Acrylonitrile | 104 |
| Polymethyl methacrylate | 105 |
| Polyethyl methacrylate | 63 |
| Polyacrylic acid | 106 |
| Dicyclopentanyl acrylate | 120 |
| Dicyclopentanyl methacrylate | 175 |

In the present invention, 2,3-dichloro-1,3-butadiene and 1-chloro-1,3-butadiene are preferable as the second monomer, and 2,3-dichloro-1,3-butadiene is particularly preferable.

One kind of the second monomer may be used alone, or two or more kinds thereof may be used in combination. Also, the term "structural units derived from the second monomer" refers to structural units corresponding to the second monomer. For example, structural units derived from 2,3-dichloro-1,3-butadiene refer to structural units corresponding to 2,3-dichloro-1,3-butadiene, that is, structural units having any of the structures selected from the group consisting of the following formulae (2a), (2b), and (2c) (where "-*" and "*-" represent bonding sites to be bonded to other structural units):

*-CH2₋CCl(-CCl=CH2₎-* ... (2a);

*-CCl(-CCl=CH2₎-CH2₋* ... (2b);

and

*-CH2₋CCl(-CCl(-*)-CH(-*))-* ... (2c).

In addition, in the case where the second monomer has a structure represented by

CXa_{X}b₌CXc_{X}d

(wherein Xₐ, X_{b}, X_{c}, and X_{d} are each independently a hydrogen atom or an appropriate substituent), the structural unit derived from the second monomer is normally a structural unit having a structure represented by

   *-CXa_{X}b₋CXc_{X}d₋*
(wherein "-*" and "*-" represent bonding sites to be bonded to other structural units). In either case, the term "other structural units" may refer to structural units corresponding to "structural units derived from the second monomer", or may refer to structural units not corresponding to "structural units derived from the second monomer", such as the "structural units derived from the chloroprene monomer" described above.

### <Third Monomer>

As described above, the polymer used in the present invention contains structural units derived from the chloroprene monomer and structural units derived from the second monomer. In a suitable and exemplary aspect of the present invention, the polymer is composed only of structural units derived from the chloroprene monomer and structural units derived from the second monomer. However, the polymer may further contain structural units derived from a third monomer (hereinafter, referred to as "third monomer") that correspond to neither the structural units derived from the chloroprene monomer nor the structural units derived from the second monomer, as long as the object of the present invention is not impaired.

Examples of the third monomer include those not corresponding to the second monomer among the monomers described above as "monomers that are copolymerizable with chloroprene".

One kind of the third monomer may be used alone, or two or more kinds thereof may be used in combination.

Also, the term "structural units derived from the third monomer" refers to structural units corresponding to the third monomer. For example, in the case where the third monomer has a structure represented by

CXe_{X}f₌CXg_{X}h

(wherein Xₑ, X_{f}, X_{g}, and Xₕ are each independently a hydrogen atom or an appropriate substituent), the structural unit derived from the third monomer is normally a structural unit having a structure represented by

   *-CXe_{X}f₋CXg_{X}h₋*
(wherein "-*" and "*-" represent bonding sites to be bonded to other structural units).

### <Configuration of Polymer>

The polymer used in the present invention contains structural units derived from the chloroprene monomer and structural units derived from the second monomer.

As described above, since the polymer contains the "structural units derived from the second monomer" described above, it can impart higher aggregate holding capability to asphalt compared to a polymer containing no "structural units derived from the second monomer". This aggregate holding capability tends to be demonstrated favorably particularly when the amount of the "structural units derived from the second monomer" in the polymer is within a specific range. Specifically, the content of the structural units derived from the second monomer in the polymer used in the present invention is 3 to 10 parts by mass with respect to 100 parts by mass of all structural units constituting the polymer. The content is preferably 9.5 parts by mass or less and more preferably 9.0 parts by mass or less, when viewed on the upper limit side. On the other hand, the content is preferably 3.5 parts by mass or more and more preferably 4.0 parts by mass or more, when viewed on the lower limit side. Here, when the second monomer constituting the polymer is of two or more kinds, the total content of structural units corresponding to the "structural units derived from the second monomer" becomes the above content.

Also, in the case where the polymer contains the "structural units derived from the third monomer" described above, the content of the structural units derived from the third monomer in the polymer is not particularly limited as long as the object of the present invention is not impaired; however, for example, it is 10 parts by mass or less with respect to 100 parts by mass of all structural units constituting the polymer. Here, when the third monomer, which may constitute the polymer, is of two or more kinds, the total content of structural units corresponding to the "structural units derived from the third monomer" becomes the above content.

The polymer can typically be obtained by a step of polymerizing the chloroprene monomer and the second monomer, as will be described later in the "Method for Producing Chloroprene Latex" described later. In the case where it is difficult to directly measure the content of the structural units derived from the second monomer in the polymer, the charging proportion of the amount of the second monomer charged with respect to the amount of all monomers used in the step of polymerizing the chloroprene monomer and the second monomer in the "Method for Producing Chloroprene Latex" described later (that is, the total amount of the amount of the chloroprene monomer charged, the amount of the second monomer charged, and the amount of the optional third monomer charged) may be estimated as the content of the structural units derived from the second monomer in the polymer.

The aspect of existence of the structural units derived from the chloroprene monomer and the structural units derived from the second monomer in the polymer is not particularly restricted as long as the object of the present invention is not impaired. The polymer may be, for example,
a copolymer containing the structural units derived from the chloroprene monomer and the structural units derived from the second monomer,
a mixture of a first homopolymer composed only of the structural units derived from the chloroprene monomer and a second homopolymer composed only of the structural units derived from the second monomer, or
a mixture of a copolymer containing the structural units derived from the chloroprene monomer and the structural units derived from the second monomer, and one or more selected from the group consisting of a first homopolymer composed only of the structural units derived from the chloroprene monomer and a second homopolymer composed only of the structural units derived from the second monomer. However, since, as the second monomer, a monomer that is copolymerizable with chloroprene is normally used, the present inventors presume that the polymer is
a copolymer comprising the structural units derived from the chloroprene monomer and the structural units derived from the second monomer, or
a mixture of a copolymer containing the structural units derived from the chloroprene monomer and the structural units derived from the second monomer, and one or more homopolymers selected from the group consisting of a first homopolymer composed only of the structural units derived from the chloroprene monomer and a second homopolymer composed only of the structural units derived from the second monomer. Here, in the case where the polymer contains the "structural units derived from the third monomer" described above, the polymer may include a copolymer containing at least one of the structural units derived from the chloroprene monomer and the structural units derived from the second monomer, and the structural units derived from the third monomer, or may include a third homopolymer composed only of the structural units derived from the third monomer.

In the present invention, the polymer is contained in the chloroprene latex described later, and by being combined with asphalt, becomes a constituent of a rubber asphalt emulsion, an asphalt layer, and an asphalt mixture. From this, it is presumed that the polymer has a particle diameter that allows the function as an asphalt modifier to be sufficiently demonstrated and allows a relatively stable emulsion state to be maintained without cohesion with each other when formed into a rubber asphalt emulsion. Specifically, the z-average particle diameter of the polymer is 150 nm or less. The z-average particle diameter on the lower limit side is preferably 10 nm or more. Here, the z-average particle diameter can be measured by using a dynamic light scattering photometer with a chloroprene latex containing the polymer as a sample.

Here, even in the case where the z-average particle diameter of the polymer is more than 150 nm, for example, in the case where the z-average particle diameter of the polymer is more than 150 nm and 200 nm or less, or in the case where it is more than 150 nm and 180 nm or less, sufficiently high aggregate holding capability may be obtained. However, in the case where the z-average particle diameter of the polymer is more than 150 nm, as compared with the case where the z-average particle diameter of the polymer is 150 nm or less, the aggregate holding capability tends to be relatively low. Accordingly, in the case where sufficiently high aggregate holding capability is to be obtained using a polymer having a z-average particle diameter of more than 150 nm, a suitable range of the content of the structural units derived from the second monomer in the polymer may be narrower than the above-described range (for example, 7.0 to 10 parts by mass or 8.0 to 9.0 parts by mass, with respect to 100 parts by mass of all structural units constituting the polymer). In consideration of the above points, from the viewpoint of obtaining sufficiently high aggregate holding capability, it tends to be more advantageous that the z-average particle diameter of the polymer is 150 nm or less.

### [Chloroprene Latex]

The chloroprene latex according to the present invention contains the polymer described above in the section "Polymer". In a typical aspect of the present invention, the chloroprene latex according to the present invention contains the polymer and a solvent such as water. In addition, the chloroprene latex may further contain an emulsifier or a surfactant, a polymerization initiator, a molecular weight regulator (a chain transfer agent), a polymerization terminator, and the like, which can be introduced due to the production process. It should be noted that the chloroprene latex does not contain asphalt, unlike the rubber asphalt emulsion described later.

The solid content in the chloroprene latex (that is, the proportion of the mass of the components obtained by removing water and other volatile components from the chloroprene latex (solid matter) with respect to the total mass of the chloroprene latex) is in many cases 40 to 65% by mass, and the content of the polymer in the chloroprene latex is in many cases 35 to 63% by mass. Here, examples of the solid matter in the chloroprene latex include the "polymer", reagents that can be used in the production process of the "polymer" (for example, the emulsifier, polymerization initiator, cocatalyst, molecular weight regulator (chain transfer agent), and polymerization terminator described later in the section "Method for Producing Chloroprene Latex" below), as well as a non-volatile monomer among the chloroprene monomer, the second monomer, and the third monomer.

In the present invention, the gel content in the chloroprene latex is 70% or more, preferably 75% or more, more preferably 80% or more, and still more preferably 85% or more. When the gel content in the chloroprene latex is at or above a certain level, there is a tendency that sufficiently high aggregate holding capability is easily obtained when the chloroprene latex is combined with asphalt to form an asphalt layer. Although the upper limit value of the gel content is not particularly limited, it is in many cases 99% or less, preferably 98% or less, and more preferably 95% or less. In the present invention, the gel content can be determined as the amount of THF (tetrahydrofuran) insoluble matter in the chloroprene latex, and specifically, it can be determined as the proportion of the mass of tetrahydrofuran insoluble matter in the polymer with respect to the mass of solid matter in the chloroprene latex when 1 g of the chloroprene latex is added to 100 mL of THF. Therefore, "%" for the gel content refers to % by mass.

In this manner, the gel content can be determined as the amount of THF (tetrahydrofuran) insoluble matter in the chloroprene latex, while a chloroprene latex obtained in actuality may, in many cases, also contain, in addition to the "polymer", reagents that can be used in the production process of the "polymer". However, the amount of the reagents that can be used in the production process of the "polymer" tends to be, in many cases, sufficiently small with respect to the amount of the "polymer". Considering this, it can be presumed that the gel content is, in substance, a parameter that relates to the proportion of the amount of THF insoluble matter among the "polymer" with respect to the total amount of the "polymer", that is, the proportion of the amount of components among the "polymer" whose degree of polymerization is at or above a certain high level.

It should be noted that a specific method for measuring the gel content can be referred to in the description of Examples described later below.

### <Method for Producing Chloroprene Latex>

In the present invention, the method for producing the chloroprene latex is not particularly limited as long as the object of the present invention is not impaired. However, in a typical aspect of the present invention, the production method includes a step of polymerizing the chloroprene monomer and the second monomer (polymerization step). Through this polymerization step, the polymer is formed. Here, in the case where, as the polymer, a polymer containing constituent units derived from the third monomer is to be formed, the polymerization step is carried out as a step of polymerizing the chloroprene monomer, the second monomer, and the third monomer.

Although the method for polymerizing the chloroprene monomer, the second monomer, and the optional third monomer in the polymerization step is not particularly limited, emulsion polymerization is preferable, and industrially, aqueous emulsion polymerization is particularly preferable. Here, in the case where emulsion polymerization is carried out in the polymerization step, the polymerization step is, in many cases, carried out as a step of adding a polymerization initiator to a mixture containing monomers such as the chloroprene monomer and the second monomer, an emulsifier, and a solvent such as water, and carrying out polymerization of the monomers.

As an emulsifier for the emulsion polymerization, compounds that act as a protective colloid such as an anionic surfactant, a nonionic surfactant, and a polyvinyl alcohol are preferable.

Specific examples of the anionic surfactant include rosin acid soap, a sodium salt of a naphthalenesulfonic acid condensate, a sodium salt of dodecylbenzenesulfonic acid, and a sodium salt of dodecylsulfuric acid.

Specific examples of the nonionic surfactant include polyoxyethylene alkyl ether, sorbitan fatty acid ester, and polyoxyethylene sorbitan fatty acid ester.

In the case where rosin acid soap is used as the emulsifier, the amount of the rosin acid soap used is preferably 3 to 8 parts by mass and more preferably 3 to 5 parts by mass, with respect to 100 parts by mass of the total of all monomers (that is, the total of the chloroprene monomer, the second monomer, and the optional third monomer) in terms of the equivalent amount of rosin acid.

When the amount of the rosin acid soap used is 3 parts by mass or more, favorable emulsification is possible, favorable control of the polymerization heat generation can be obtained, the production of cohesive mass can be suppressed, and favorable product appearance can be obtained. When the amount of the rosin acid soap used is 8 parts by mass or less, the product cost is reduced, which is preferable.

It should be noted that the particle diameter of the resulting chloroprene latex can be adjusted by increasing or decreasing the amount of the emulsifier used, and for example, in the case where rosin acid soap is used as the emulsifier, the particle diameter of the resulting chloroprene latex can be increased by reducing the amount of the rosin acid soap used.

The sodium salt of a naphthalenesulfonic acid condensate is a sodium salt of a naphthalenesulfonic acid-formaldehyde condensate or the like. By adding a sodium salt dispersant of a naphthalenesulfonic acid condensate, even in a system emulsified with 3 parts by mass or less of rosin acid soap, it is possible to suppress the occurrence of problems such as the production of cohesive mass.

One kind of the emulsifier may be used alone in emulsion polymerization, or two or more kinds thereof may be used in combination.

Here, in the case where rosin acid soap is used as the emulsifier, the emulsifier may be composed only of rosin acid soap, or may be a combination of rosin acid soap and an emulsifier other than rosin acid soap. The emulsifier may be a combination of rosin acid soap and an anionic surfactant other than rosin acid soap, for example, a combination of rosin acid soap and any one selected from the group consisting of a sodium salt of a naphthalenesulfonic acid condensate, a sodium salt of dodecylbenzenesulfonic acid, and a sodium salt of dodecylsulfuric acid.

In one suitable and exemplary aspect of the present invention, the emulsifier is a combination of rosin acid soap and a sodium salt of a naphthalenesulfonic acid condensate. In this case, the amount of the sodium salt of a naphthalenesulfonic acid condensate used in combination with the rosin acid soap is, for example, 0.1 to 0.5 parts by mass with respect to 100 parts by mass of the total of all monomers.

As a polymerization initiator, normal radical polymerization initiators can be used. For example, in the case of emulsion polymerization, a normal organic or inorganic peroxide such as benzoyl peroxide, potassium persulfate, or ammonium persulfate, or an azo compound such as azobisisobutyronitrile is used. Together with the radical polymerization initiator, a cocatalyst such as anthraquinone sulfonate, potassium sulfite, or sodium sulfite can be used as appropriate. The amount of the initiator can be set as appropriate.

In general, a molecular weight regulator (a chain transfer agent) may be used at the time of polymerization for the purpose of obtaining a copolymer having a desired molecular weight and distribution in the production of the chloroprene latex.

The chain transfer agent is not particularly restricted, and examples thereof include alkyl xanthogen disulfides represented by O,O-diisopropyl dithiobis(thioformate), and alkyl mercaptans represented by dodecylmercaptan.

One kind of the chain transfer agent may be used alone, or two or more kinds thereof may be used in combination.

Here, although the amount of the chain transfer agent used in polymerization can be set as appropriate, the larger the amount of the chain transfer agent, the smaller the gel content in the resulting polymer is, and the aggregate holding capability in the asphalt layer obtained by combining this polymer with asphalt may decrease. In such a case, it is preferable to carry out the polymerization in the absence of the chain transfer agent or in the presence of the minimum necessary amount of the chain transfer agent.

In general, for the purpose of obtaining a polymer having a desired molecular weight and distribution in the production of the chloroprene latex, when a predetermined polymerization rate is reached, a polymerization terminator is added to terminate the reaction. The polymerization terminator is not particularly restricted, and it is possible to use a terminator that is normally used, such as phenothiazine, para-tert-butylcatechol, hydroquinone, hydroquinone monomethyl ether, or diethylhydroxylamine.

The production method may also include, after the termination of the polymerization reaction, a step of removing unreacted monomers. The step of removing unreacted monomers can be carried out by a well-known method, for example, steam distillation.

### [Rubber Asphalt Emulsion]

The rubber asphalt emulsion according to the present invention contains the polymer described above in the section "Polymer" and asphalt. In a typical aspect of the present invention, the rubber asphalt emulsion according to the present invention is obtained by mixing the chloroprene latex with asphalt. The rubber asphalt emulsion contains the polymer, asphalt, and water, and may further contain a surfactant.

### <Polymer>

The polymer constituting the rubber asphalt emulsion according to the present invention is the polymer described above in the section "Polymer". In a typical aspect of the present invention, the polymer is combined with asphalt in the form of the "chloroprene latex".

The blending proportion of the chloroprene latex with respect to asphalt is, in terms of solid matter of the chloroprene latex, preferably 0.5 to 40.0 parts by mass, more preferably 1.0 to 30.0 parts by mass, and still more preferably 2.0 to 20.0 parts by mass, with respect to 100 parts by mass of asphalt.

One kind of the chloroprene latex may be used alone, or two or more kinds thereof may be used in combination.

Also, the amount of solid matter of the chloroprene latex in the rubber asphalt emulsion is preferably 0.5 to 20 parts by mass, more preferably 1.0 to 10 parts by mass, and still more preferably 2.0 to 5.0 parts by mass, with respect to 100 parts by mass of solid matter of the rubber asphalt emulsion. Here, the solid matter in the rubber asphalt emulsion refers to the components obtained by removing water and other volatile components from the rubber asphalt emulsion, examples of which include the solid matter in the chloroprene latex (that is, the "polymer", the reagents that can be used in the production process of the "polymer", and the non-volatile monomer among the chloroprene monomer, the second monomer, and the third monomer), asphalt, the surfactant described later, and the other components described later in the section "Other Components" below.

Here, in relation to the "blending proportion of the chloroprene latex with respect to asphalt" and the "amount of solid matter of the chloroprene latex in the rubber asphalt emulsion", the amount of the "polymer" in the rubber asphalt emulsion should be the amount obtained by subtracting the amount of solid matter other than the polymer contained in the chloroprene latex from the amount of solid matter of the chloroprene latex, while the present inventors assume that the amount of solid matter other than the polymer contained in the chloroprene latex is, in many cases, sufficiently smaller compared to the amount of solid matter of the chloroprene latex. Accordingly, the present inventors consider that, in many cases, it does not cause a substantial problem to regard the "blending proportion of the chloroprene latex with respect to asphalt" and the "amount of solid matter of the chloroprene latex in the rubber asphalt emulsion" as, respectively, the proportion of the "polymer" with respect to asphalt and the amount of the "polymer" in the rubber asphalt emulsion.

One kind of the chloroprene latex may be used alone, or two or more kinds thereof may be used in combination.

### <Asphalt>

The asphalt constituting the rubber asphalt emulsion according to the present invention is not particularly limited, and well-known and publicly-used asphalt can be used. Examples of the asphalt include bituminous materials such as straight asphalt, blown asphalt, semi-blown asphalt, natural asphalt, modified asphalt, solvent-deasphalted asphalt, tar and pitch, A heavy oil, B heavy oil, and C heavy oil.

The content of the asphalt is preferably 50 to 99.9% by mass, more preferably 83 to 99% by mass, and still more preferably 89 to 99% by mass, with respect to 100% by mass of solid matter of the rubber asphalt emulsion.

The content of the asphalt is preferably 30 to 74% by mass, more preferably 35 to 72% by mass, and still more preferably 40 to 70% by mass, with respect to 100% by mass of the rubber asphalt emulsion.

One kind of the asphalt may be used alone, or two or more kinds thereof may be used in combination.

The asphalt preferably has the form of particles (asphalt particles). The shape of the asphalt particles is not particularly limited, and may be spherical or elliptical. Among them, it is preferable that the shape of the asphalt particles is spherical.

The z-average particle diameter of the asphalt is preferably 0.5 to 20.0 µm, more preferably 1.0 to 10.0 µm, and still more preferably 2.0 to 8.0 µm.

The z-average particle diameter can be determined by using a dynamic light scattering photometer.

### <Surfactant>

It is preferable that the rubber asphalt emulsion of the present invention further contains a surfactant.

The surfactant is not particularly limited, and examples thereof include anionic surfactants, cationic surfactants, and nonionic surfactants.

Examples of the anionic surfactants include neutralized products of tall oil and sodium hydroxide or potassium hydroxide. Examples of the cationic surfactants include hydrochlorides and phosphates of alkylamide polyamines, alkylimidazopolyamines, N-alkylpolypropylenediamines, and other amines. Examples of the nonionic surfactants include polyoxyethylene alkyl ether, sorbitan fatty acid ester, and polyoxyethylene sorbitan fatty acid ester.

Among these, the surfactant is preferably a nonionic surfactant and more preferably polyoxyethylene alkyl ether.

Examples of the polyoxyethylene alkyl ether include polyoxyethylene lauryl ether, polyoxyethylene cetyl ether, polyoxyethylene stearyl ether, polyoxyethylene oleyl ether, polyoxyethylene myristyl ether, polyoxyethylene octyldodecyl ether, polyoxyalkylene alkyl ether, polyoxyphenylene distyrenated phenyl ether, polyoxyethylene tribenzyl phenyl ether, polyoxyalkylene alkenyl ether, and polyoxyethylene nonylphenyl ether.

The surfactant may be synthetically obtained or may be a commercially available product.

Examples of the commercially available product include EMULGEN 103, 104P, 106, 108, 109P, 120, 123P, 130K, 147, 150, 210P, 220, 306P, 320P, 350, 404, 408, 409PV, 420, 430, 705, 707, 709, 1108, 1118S-70, 1135S-70, 1150S-60, 2020G-HA, 2025G, LS-106, LS-110, LS-114, MS-110, A-60, A-90, B-66, PP-290, LATEMUL PD-420, PD-430, PD-430S, PD450, SUPER SP-L10, AS-10V, AO-10V, AO-15V, TW-L120, TW-L106, TW-P120, TW-S120V, TW-S320V, TW-O120V, TW-O106V, TW-IS399C, SUPER TW-L120, 430V, 440V, 460V, MS-50, MS-60, MO-60, MS-165V, EMANON 1112, 3199V, 3299V, 3299RV, 4110, CH-25, CH-40, CH-60(K), AMIET 102, 105, 105A, 302, 320, AMINON PK-02S, L-02, and HOMOGENOL L-95 (all manufactured by Kao Corporation).

The content of the surfactant is preferably 0.1 to 10.0 parts by mass, more preferably 0.2 to 7.0 parts by mass, and still more preferably 0.3 to 6.0 parts by mass, with respect to 100 parts by mass of solid matter of the rubber asphalt emulsion.

One kind of the surfactant may be used alone, or two or more kinds thereof may be used in combination.

### <Water>

The water is not particularly limited, and examples thereof include industrial water and tap water.

The water is in an amount of preferably 25 to 400 parts by mass, more preferably 35 to 230 parts by mass, and still more preferably 40 to 150 parts by mass, with respect to 100 parts by mass of solid matter of the rubber asphalt emulsion.

### <Other Components>

The rubber asphalt emulsion according to the present invention may further contain components other than the polymer, asphalt, surfactant, and water described above (hereinafter, also referred to as "other components").

Examples of the other components include a salt such as calcium chloride, a film-forming agent, a thickening stabilizer, and a retardant for the stabilization of emulsification.

### <Physical Properties of Rubber Asphalt Emulsion>

The multiple stress creep recovery (MSCR) of the rubber asphalt emulsion depends also on the parts by mass of the solid matter of the chloroprene latex in an asphalt composition obtained by drying the rubber asphalt emulsion. From the viewpoint of excellent aggregate holding capability, the %R value obtained by carrying out MSCR measurement in accordance with AASHTO T350-14 on the asphalt composition obtained by drying the rubber asphalt emulsion is preferably 20 to 95%, more preferably 21 to 80%, still more preferably 23 to 50%, and particularly preferably 25 to 40%.

The %R value of MSCR of the rubber asphalt emulsion can be determined by the method described in Examples below.

### <Method for Producing Rubber Asphalt Emulsion>

The method for producing the rubber asphalt emulsion preferably includes a step of adding the asphalt, the surfactant, and the water to the chloroprene latex described above (hereinafter, also referred to as "rubber asphalt emulsion forming step"). In the rubber asphalt emulsion forming step, the order of adding the asphalt, the surfactant, and the water to the chloroprene latex described above is not particularly restricted as long as the rubber asphalt emulsion is formed, and these may be added separately or these may be added at the same time.

Nevertheless, it is preferable that the "rubber asphalt emulsion forming step" includes a step of preparing a mixture containing the asphalt, the surfactant, and the water to form an asphalt emulsion (asphalt emulsion forming step). In the present invention, in a suitable and exemplary aspect of the present invention, the "rubber asphalt emulsion forming step" may be carried out as a step including:
a step GS1 of preparing a mixture containing the asphalt, the surfactant, and the water to form an asphalt emulsion;
a step GS2 of preparing a mixture containing the chloroprene latex and the surfactant; and
a step GS3 of mixing the asphalt emulsion obtained in the step GS1 with the mixture obtained in the step GS2.

Also, in the step GS1, the order of adding the asphalt, the surfactant, and the water is not particularly restricted as long as an asphalt emulsion is formed, and these may be added separately or these may be added at the same time. For example, the step GS1 (asphalt emulsion forming step) may be carried out as:
a step GS1A of adding the surfactant to the asphalt and then mixing with the water to form an asphalt emulsion; or
a step GS1B of adding the asphalt to a mixture of the surfactant and the water.

Also, in the step GS2, the asphalt may also be mixed. In this case, the step GS2 is carried out as a step GS2' of preparing a mixture containing the chloroprene latex, the surfactant, and the asphalt.

The method for mixing the chloroprene latex with the asphalt, the surfactant, and the water is not particularly restricted, and examples thereof include a variety of well-known methods such as methods in which the components are mixed with, for example, a defoaming kneader, a dry ball mill, a dry bead mill, a blade planetary motion-type mixer, a container rotation-type planetary motion mixer, a crusher, a mortar, a homogenizer, or a colloid mill. Among these, as the above mixing method, it is preferable to emulsify using a homogenizer or a colloid mill.

The method for producing the rubber asphalt emulsion may include a step of adding the other component described above, as necessary.

The method may also include, for example, before mixing the chloroprene latex with the asphalt, a step of adjusting the pH of the chloroprene latex (for example, in the case where the "rubber asphalt emulsion forming step" includes the steps GS1, GS2, and GS3, in the step GS2, the pH may be adjusted by adding a pH adjuster such as hydrochloric acid to the chloroprene latex and the surfactant).

The pH of the chloroprene latex after the step of adjusting the pH is preferably 1.0 to 4.5 and more preferably 1.5 to 3.5.

A pH adjuster used in the step of adjusting the pH is not particularly limited, and a well-known pH adjuster can be used.

The rubber asphalt emulsion according to the present invention is preferably a rubber asphalt emulsion produced by the above-described method for producing the rubber asphalt emulsion, and it is more preferable that the rubber asphalt emulsion produced by the above-described method for producing the rubber asphalt emulsion forms a sea-island structure when dried.

The present inventors presume that a composition obtained by the method for producing the rubber asphalt emulsion according to the present invention, that is, by mixing the chloroprene latex with the asphalt, has a sea-island structure in which chloroprene forms the sea portion.

### [Applications of Rubber Asphalt Emulsion]

The rubber asphalt emulsion according to the present invention can be suitably used as a material for forming an asphalt layer and an asphalt mixture.

Here, the asphalt layer is obtained by applying and drying the rubber asphalt emulsion, and more specifically, it can be obtained by applying the rubber asphalt emulsion to an appropriate plane (a base material or the ground) and then drying it. In other words, the asphalt layer can be regarded as containing the polymer described above in the "Polymer" and the asphalt.

In addition, the asphalt mixture can be obtained by mixing the rubber asphalt emulsion with an aggregate. In other words, the asphalt mixture can be regarded as containing the polymer described above in the "Polymer", the asphalt, and the aggregate. Here, the aggregate may be an aggregate generally used for asphalt pavements, such as crushed stone or sand, and its particle diameter can be set as appropriate depending on the application.

It is preferable that the rubber asphalt emulsion according to the present invention forms a sea-island structure when dried. In particular, a rubber asphalt emulsion obtained by mixing the above-described chloroprene latex with the above-described asphalt emulsion (for example, a rubber asphalt emulsion obtained by a production method including steps such as the steps GS1, GS2, and GS3) tends to easily form a sea-island structure when dried. A layered structure obtained by drying the rubber asphalt emulsion has regions of the asphalt (island portions) present in regions containing the polymer (sea portions), and thus has excellent aggregate holding capability.

As drying conditions for forming the sea-island structure, the drying time is preferably one minute to 168 hours, and the drying temperature is preferably 10°C to 95°C. From the viewpoint that the sea-island structure is more easily formed, the drying time is more preferably 30 minutes to 96 hours and still more preferably 18 to 36 hours, and the drying temperature is more preferably 20°C to 85°C, still more preferably 30 to 75°C, and still more particularly preferably 50 to 75°C.

The drying method is not particularly restricted, and a well-known method can be used, and examples of the drying method include, for example, drying methods using warm air, hot air, or low-humidity air.

In the case where the rubber asphalt emulsion is obtained by mixing the above-described chloroprene latex with the above-described asphalt emulsion, the solid matter of the chloroprene latex is preferably 0.5 to 20 parts by mass, more preferably 1.0 to 10 parts by mass, and still more preferably 2.0 to 5.0 parts by mass, with respect to 100 parts by mass of the solid matter of the asphalt emulsion.

One kind of the chloroprene latex may be used alone, or two or more kinds thereof may be used in combination.

From the viewpoint of having excellent aggregate holding capability, the rubber asphalt emulsion according to the present invention can be suitably used for road pavements. Examples of a method for road pavements include a chip seal method, in which a rubber asphalt emulsion and an aggregate are layered in this order on the surface side of a road and then compacted.

In the chip seal method, a road may be paved with a single layer in which one layer of the rubber asphalt emulsion and one layer of the aggregate are each formed (seal coating) or with a multilayer in which these single layers are laminated with each other (armor coating).

From the viewpoint of having excellent aggregate holding capability, the above-described rubber asphalt emulsion can be applied to, in addition to the chip seal method, scrub sealing, tack coating, binders for roadbeds (including onsite base course recycling construction, Cold In-place Recycling), fog sealing, thin-layer surface treatment methods, and the like.

### EXAMPLES

Hereinafter, the present invention will be described with reference to examples and comparative examples, but the present invention is not limited to the following examples by any means.

### [Example 1]

### <Preparation of Chloroprene Latex>

A reactor with an internal volume of 60 liters was charged with 18.3 kg (91.5 parts by mass when the amount of all monomers was defined as 100 parts by mass (91.5 phm (parts per hundred monomer))) of 2-chloro-1,3-butadiene (chloroprene), 1.7 kg (8.5 parts by mass when the amount of all monomers was defined as 100 parts by mass (8.5 phm)) of 2,3-dichloro-1,3-butadiene, 18 kg of pure water, 860 g of disproportionated rosin acid (manufactured by ARAKAWA CHEMICAL INDUSTRIES, LTD., R-600), 230 g of potassium hydroxide, 50 g of sodium hydroxide, and 43 g of sodium salt of β-naphthalenesulfonic acid-formalin condensate, and emulsification was performed to allow the disproportionated rosin acid to be converted into the corresponding rosin soap. Thereafter, potassium persulfate was added as a polymerization initiator to the resulting mixture, and polymerization was carried out at 40°C in a nitrogen atmosphere. When the polymerization conversion rate reached 88%, an emulsion of phenothiazine was immediately added to the reaction mixture to terminate the polymerization. Subsequently, the unreacted monomers in the resulting mixture were then removed by steam distillation, to give a polymer latex of a chloroprene polymer (hereinafter referred to as "chloroprene latex"). The solid content of the obtained chloroprene latex was 49.7% by mass.

The physical properties of the obtained chloroprene latex are shown in Table 2-1 below.

### <Production of Asphalt Emulsion>

3.50 kg of pure water that had been warmed to 80°C was put into a vessel with an internal volume of 5 liters, which was further charged with 24 g of dimethyl hydrogenated beef tallow amine (manufactured by NOF Corporation, product name: NISSAN AMINE (registered trademark) ABT) as a surfactant, 19 g of 35 mass% hydrochloric acid (manufactured by Kanto Chemical Co., Inc.), and 14 g of calcium chloride (manufactured by Kanto Chemical Co., Inc.), and the resulting mixture was stirred, to give an aqueous surfactant solution. This aqueous surfactant solution and 3.50 kg of straight asphalt that had been heated and melted at 140°C (SHOWA REKISEI INDUSTRIES CO., LTD., product name: SA120-150) were emulsified using a colloid mill (IKA Japan K.K., product name: Magic LAB (registered trademark) XP) such that the asphalt emulsion production rate reached 0.5 L/minute, thereby giving an asphalt emulsion having a solid content of 50% by mass.

### <Production of Rubber Asphalt Emulsion>

To 100 g of the chloroprene latex obtained in the "Preparation of Chloroprene Latex", polyoxyethylene alkyl ether (Kao Corporation, EMULGEN 1118S-70) as a nonionic surfactant was added so as to reach 3% by mass, followed by further addition of 0.5 g of 35 mass% hydrochloric acid (manufactured by Kanto Chemical Co., Inc.) to adjust the pH to 2.0, thereby giving a chloroprene latex containing polyoxyethylene alkyl ether.

40 g of the asphalt emulsion (having 50% by mass of solid matter) prepared in the above "Production of Asphalt Emulsion" was heated at 60°C. To this heated asphalt emulsion, 1.25 g of the chloroprene latex containing polyoxyethylene alkyl ether was added to give a rubber asphalt emulsion.

It should be noted that, for the obtained rubber asphalt emulsion, the amount of the chloroprene latex added was determined such that the amount of solid matter in the chloroprene latex was 3 parts by mass when the amount of solid matter in the asphalt emulsion was defined as 100 parts by mass. Specifically, the amount of the chloroprene latex added was calculated based on the following expression. 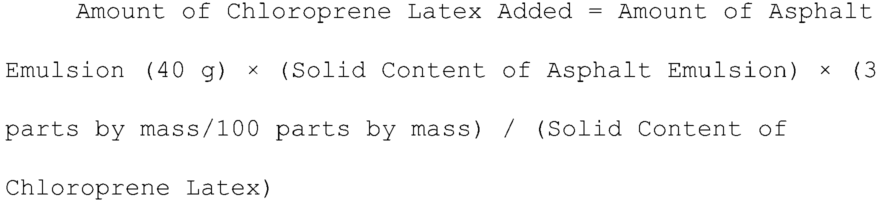 Amount of Chloroprene Latex Added = Amount of Asphalt Emulsion (40 g) × (Solid Content of Asphalt Emulsion) × (3 parts by mass/100 parts by mass)/(Solid Content of Chloroprene Latex)

It should be noted that, although hydrochloric acid may be used for the purpose of adjusting pH after preparing the chloroprene latex, hydrochloric acid is volatilized under the condition for measuring the solid matter and thus have no influence on the solid matter.

### <Preparation of Sample for MSCR (Multiple Stress Creep Recovery) Measurement>

40 g of the rubber asphalt emulsion prepared in the above "Production of Rubber Asphalt Emulsion" was poured into a silicone tray having a bottom area of 216 mm × 175 mm and a depth of 40 mm, to allow the rubber asphalt emulsion to spread throughout the entire tray. Next, the rubber asphalt emulsion was dried at 23°C for 24 hours and then dried in an oven at 60°C for 24 hours, to give a sample for multiple stress creep recovery (MSCR) measurement (corresponding to an asphalt layer).

The obtained sample for measurement was used for MSCR measurement, as described later in the section "Multiple Stress Creep Recovery (MSCR) %R" below. The results are shown in Table 2-1 below.

### [Evaluation Methods]

### <Gel Content (Amount of Tetrahydrofuran Insoluble Matter)>

1 g of the chloroprene latex to be measured was added dropwise to 100 mL of tetrahydrofuran (THF) solvent, and the mixture obtained was shaken overnight. The resulting mixture was then subjected to centrifugation to separate the supernatant (dissolution phase) and the precipitate. For each of the separated supernatant (dissolution phase) and the precipitate, the solvent contained in the supernatant and the solvent in the precipitate were each evaporated and dried at 100°C under normal pressure over 1 hour. The mass of the residue obtained from the precipitate by the evaporation and drying was measured, and it was taken as the mass of tetrahydrofuran insoluble matter. Meanwhile, 1 g of the chloroprene latex to be measured was subjected to evaporation and drying at 141°C under normal pressure over 30 minutes. The mass of the residue obtained from the precipitate by the evaporation and drying was measured, and it was taken as the mass of the solid matter of the chloroprene latex.

Then, using these amounts, the gel content (the amount of tetrahydrofuran insoluble matter) was determined based on the following expression and evaluated. 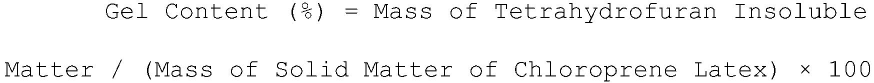 Gel Content (%) = Mass of Tetrahydrofuran Insoluble Matter/(Mass of Solid Matter of Chloroprene Latex) × 100

### <Polymerization Conversion Rate>

The chloroprene latex obtained after polymerization was collected, and was dried at 100°C under normal pressure for 2 hours. The polymerization conversion rate was calculated from the amount of solid matter obtained after the drying.

It should be noted that the solid content and polymerization conversion rate in the chloroprene latex were determined according to the following expressions. 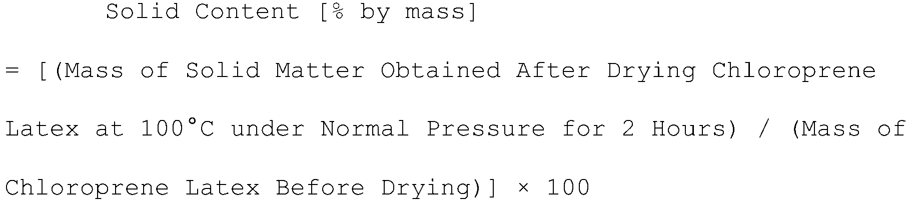 Solid Content [% by mass] = [(Mass of Solid Matter Obtained After Drying Chloroprene Latex at 100°C under Normal Pressure for 2 Hours) / (Mass of Chloroprene Latex Before Drying)] × 100 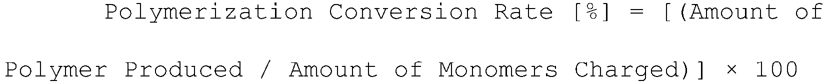 Polymerization Conversion Rate [%] = [(Amount of Polymer Produced / Amount of Monomers Charged)] × 100

Here, the amount of the polymer produced was determined by subtracting the amount of solid matter other than the polymer contained in the chloroprene latex from the amount of solid matter contained in the chloroprene latex obtained after polymerization.

### <Z-Average Particle Diameter>

The z-average particle diameter of latex particles (polymer particles) in the chloroprene latex was measured as follows.

The chloroprene latex was diluted with pure water to 0.01 to 0.1% by mass, and for the obtained liquid, the z-average particle diameter was measured using a dynamic light scattering photometer (ZETASIZER (registered trademark) Nano-S manufactured by Malvern Panalytical Ltd.).

### <Multiple Stress Creep Recovery (MSCR) %R>

Regarding the evaluation of the aggregate holding capability for the asphalt composition obtained by drying the rubber asphalt emulsion, multiple stress creep recovery (MSCR) was measured in accordance with AASHTO (the American Association of State Highway and Transportation Officials) T350-14 and evaluated as an index of the aggregate holding capability.

Specifically, a rheometer (MCR301 manufactured by Anton Paar GmbH) was used for the measurement, and a parallel plate (diameter: 25 mm) regulated in JIS K 7244-10: 2005 was used as a measuring jig.

After setting the device to 64°C to sufficiently perform temperature adjustment, about 1.0 g of the sample for measurement was set, a surplus part of the sample was then removed, and measurement was carried out.

The measurement was performed in the following steps.
(1) The deformation amount (A) before the application of stress is recorded.
(2) Stress of 3.2 kPa is applied for one second, and the deformation amount (B) at that time is recorded.
(3) After the application of the stress is stopped, the sample is left for nine seconds (during this time, the sample tends to return to the origin due to its rubber elasticity), and the deformation amount (C) after nine seconds elapses is recorded.

The steps (1) to (3) were repeated 10 cycles.

In each cycle, the amount of return from deformation caused by the stress (%R: recovery percentage) was calculated according to the following expression. 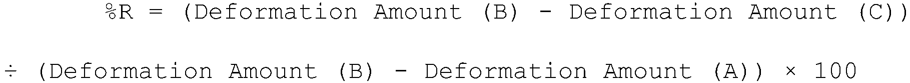 %R = (Deformation Amount (B) - Deformation Amount (C)) ÷ (Deformation Amount (B) - Deformation Amount (A)) × 100

The above expression was calculated 10 cycles, and the average was determined as the multiple stress creep recovery. It can be said that, the higher the %R value of the multiple stress creep recovery (MSCR), the better the aggregate holding capability is.

When the %R value of MSCR exceeds 25%, the aggregate holding capability can be said to be sufficient even in actual pavements.

### [Examples 2 to 3, Comparative Examples 1 to 8, and Reference Example R1]

Examples 2 and 3, Comparative Examples 1 to 8, and Reference Example R1 were carried out in the same manner as in Example 1 except that, in the "Preparation of Chloroprene Latex", the amount of 2,3-dichloro-1,3-butadiene in all monomers, the amount of optional n-dodecylmercaptan (chain transfer agent) with respect to the amount of all monomers, and the polymerization addition rate were changed to the values shown in Tables 2-1 to 2-3.

It should be noted that, in Comparative Examples 7 to 8 and Reference Example R1, the amount of disproportionated rosin acid charged was also changed to 340 g.

The physical properties of the obtained chloroprene latex and the results of the multiple stress creep recovery (MSCR) measurement are shown in Tables 2-1 to 2-3 below.

### [Table 2-1]

**Table 2-1**

| | | | | Example 1 | Example 2 | Example 3 |
|---|---|---|---|---|---|---|
| Polymerization conditions | Monomer | Chloroprene | parts by mass | 91.5 | 95.7 | 93.6 |
| | | 2,3-Dichloro-1,3-butadiene | parts by mass | 8.5 | 4.3 | 6.4 |
| | | Total | parts by mass | 100 | 100 | 100 |
| | Chain transfer agent | n-Dodecylmercaptan | parts by mass | 0 | 0 | 0 |
| | Polymerization conversion rate | | % | 88 | 89 | 90 |
| Physical properties of chloroprene latex | Gel content | | % | 88 | 87 | 95 |
| | Solid content | | % | 49.7 | 48.8 | 49.1 |
| | Z-average particle diameter | | nm | 125 | 125 | 125 |
| Application property | MSCR %R | | % | 31 | 27.4 | 27.2 |

### [Table 2-2]

**Table 2-2**

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Polymerization conditions | Monomer | Chloroprene | parts by mass | 100 | 97.9 | 93.6 | 93.6 | 91.5 | 87.2 |
| | | 2,3-Dichloro-1,3-butadiene | parts by mass | 0 | 2.1 | 6.4 | 6.4 | 8.5 | 12.8 |
| | | Total | parts by mass | 100 | 100 | 100 | 100 | 100 | 100 |
| | Chain transfer agent | n-Dodecylmercaptan | parts by mass | 0 | 0 | 0.03 | 0.06 | 0.06 | 0 |
| | Polymerization conversion rate | | % | 88 | 88 | 88 | 89 | 88 | 89 |
| Physical properties of chloroprene latex | Gel content | | % | 88 | 88 | 49 | 35 | 45 | 85 |
| | Solid content | | % | 58.9 | 48.6 | 49.3 | 49.5 | 48.8 | 49.9 |
| | Z-average particle diameter | | nm | 125 | 125 | 125 | 125 | 125 | 122 |
| Application property | MSCR %R | | % | 19.8 | 20.9 | 23.7 | 19.5 | 19 | 23.8 |

### [Table 2-3]

**Table 2-3**

| | | | | Comparative Example 7 | Comparative Example 8 | Reference Example R1 |
|---|---|---|---|---|---|---|
| Polymerization conditions | Monomer | Chloroprene | parts by mass | 91.5 | 91.5 | 91.5 |
| | | 2,3-Dichloro-1,3-butadiene | parts by mass | 8.5 | 8.5 | 8.5 |
| | | Total | parts by mass | 100 | 100 | 100 |
| | Chain transfer agent | n-Dodecylmercaptan | parts by mass | 0.04 | 0.08 | 0 |
| | Polymerization conversion rate | | % | 89 | 89 | 89 |
| Physical properties of chloroprene latex | Gel content | | % | 87 | 71 | 95 |
| | Solid content | | % | 50.1 | 58.3 | 59.1 |
| | Z-average particle diameter | | nm | 189 | 198 | 172 |
| Application property | MSCR %R | | % | 21 | 15.1 | 26.5 |

The rubber asphalt emulsions of the examples exhibited %R values of MSCR exceeding 25%, indicating that they have sufficient aggregate holding capability even in actual pavements.

## Claims

1. A chloroprene latex comprising a polymer containing structural units derived from a chloroprene monomer and structural units derived from a second monomer other than the chloroprene monomer,
wherein a gel content in the chloroprene latex is 70% or more,
wherein the second monomer is a monomer such that, when homopolymerized, an obtained homopolymer has crystallization temperature, glass transition temperature, or melting point of 80°C or higher,
wherein a content of the structural units derived from the second monomer in the polymer is 3 to 10 parts by mass with respect to 100 parts by mass of all structural units constituting the polymer, and
wherein a z-average particle diameter of the polymer is 150 nm or less.

2. The chloroprene latex according to claim 1, wherein the second monomer is 2,3-dichloro-1,3-butadiene.

3. The chloroprene latex according to claim 1, wherein the z-average particle diameter of the polymer is 10 nm or more.

4. The chloroprene latex according to claim 1, wherein the gel content is 99% or less.

5. A rubber asphalt emulsion obtained by mixing the chloroprene latex according to any one of claims 1 to 4 with asphalt.

6. An asphalt layer obtained by applying and drying the rubber asphalt emulsion according to claim 5.

7. An asphalt mixture obtained by mixing the rubber asphalt emulsion according to claim 5 with an aggregate.
